# EUROPEAN PATENT APPLICATION

(11) **EP 4 518 493 A1**
(43) Date of publication of application: **05.03.2025**
(21) Application number: 23795478.9
(22) Date of filing: 26.04.2023
(51) Int. Cl.: H04W 72/04

(54) **RESOURCE SELECTION METHOD, DEVICE AND APPARATUS, AND STORAGE MEDIUM**

(30) Priority: 29.04.2022 CN 202210474697
(71) Applicant: Datang Mobile Communications Equipment Co., Ltd., Beijing 100085 (CN)
(72) Inventor: ZHANG, Huiying, Beijing 100085 (CN)
(74) Representative: Studio Torta S.p.A.
(86) International application number: PCT/CN2023/090881
(87) International publication number: WO 2023/208046

(57) **Abstract**

Embodiments of the present disclosure provide a resource selection method, device and apparatus, and a storage medium. The method is applied to a first terminal, and comprises: determining configuration information of a sidelink measurement gap of the first terminal; selecting, from a candidate resource set and according to the configuration information of the sidelink measurement gap, resources outside a time range of the sidelink measurement gap for data transmission.

## Description

### CROSS-REFERENCES TO RELATED APPLICATIONS

The present application claims priority to Chinese patent application No. 202210474697.0 filed on April 29, 2022, entitled "Resource Selection Method, Device and Apparatus, and Storage Medium", which is hereby incorporated by reference in its entirety.

### FIELD

The present application relates to the field of radio communication, and in particular, to methods and apparatuses for resource selection, devices and a storage medium.

### BACKGROUND

Direct communication refers to a way in which neighboring terminals (also known as user equipments (UEs)) may perform data transmission within a close range through a direct communication link (sidelink (SL), or also known as proximity communication port 5 (PC5)). The radio interface corresponding to the direct communication link is referred as to a direct communication interface, also known as a sidelink interface, a SL interface, or a PC5 interface.

In the related art, there are two modes for determining transmission resources used by the terminal with SL interface to communicate with other terminals or network devices: a base station scheduling mode and a terminal autonomous selection mode. For the terminal autonomous selection mode, the terminal randomly selects one or more SL resource blocks as transmission resources based on available resource set provided by the physical layer within an allowed time range of data packet transmission.

However, in some scenarios, such as when the terminals use sidelink for positioning between each other, the terminal that measures the sidelink positioning reference signal (SL PRS) cannot simultaneously transmit the sidelink or even cannot receive other sidelink channels, if the terminal selects transmission resources using the traditional method, it may lead to data packet loss or inability to transmit.

### BRIEF SUMMARY

In response to the problems in the related art, embodiments of the present application provide methods and apparatuses for resource selection, devices and a storage medium.

An embodiment of the present application provides a method for resource selection, performed by a first terminal, including:
determining configuration information for a sidelink measurement gap (SL MG) of the first terminal; and
selecting resources outside a time range of the SL MG from a candidate resource set for data transmission based on the configuration information for the SL MG.

In an embodiment, determining configuration information for the SL MG of the first terminal includes:
receiving a first message transmitted from a second terminal, where the first message carries resource information of a sidelink positioning reference signal (SL PRS) and/or the configuration information for the SL MG; and
determining the configuration information for the SL MG based on the first message.

In an embodiment, in case that the first message carries the resource information of the SL PRS, determining the configuration information for the SL MG based on the first message includes:
determining the configuration information for the SL MG based on the resource information of the SL PRS.

In an embodiment, determining the configuration information for the SL MG based on the resource information of the SL PRS includes:
transmitting a second message to a first network device based on the resource information of the SL PRS, where the second message is used to request the configuration information for the SL MG; and
receiving a third message transmitted from the first network device, where the third message carries the configuration information for the SL MG.

In an embodiment, the second message carries one or more pieces of following information:
a universal set or subset of the resource information of the SL PRS;
a resource information identifier of the SL PRS;
a sidelink identifier of the first terminal and/or the second terminal; or
indication information for indicating to receive the SL PRS.

In an embodiment, after determining the configuration information for the SL MG, the method further includes:
transmitting the configuration information for the SL MG to the second terminal.

In an embodiment, the configuration information for the SL MG includes one or more of the following:
a frequency point where SL PRS locates;
a measurement period and offset of SL PRS;
a measurement duration of SL PRS; or
a valid duration of the SL MG.

In an embodiment, the resource information of the SL PRS includes one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

In an embodiment, the first message includes any of the following:
a positioning protocol message for sidelink;
a signaling message for sidelink;
a radio resource control message for sidelink;
a media access control-control element (MAC CE) message for sidelink; or
physical layer scheduling control information for sidelink.

In an embodiment, the second message or the third message includes any of the following:
radio resource control message; or
media access control-control element (MAC CE) message.

An embodiment of the present application further provides a method for resource selection, performed by a second terminal, including:
transmitting a first message to a first terminal, where the first message carries resource information of a sidelink positioning reference signal (SL PRS) and/or configuration information for a sidelink measurement gap (SL MG) of the first terminal.

In an embodiment, the method further includes:
receiving the configuration information for the SL MG transmitted from the first terminal.

In an embodiment, after receiving the configuration information for the SL MG transmitted from the first terminal, the method further includes:
selecting resources outside a time range of the SL MG from a candidate resource set for transmitting data to the first terminal based on the configuration information for the SL MG.

An embodiment of the present application further provides a method for resource selection, performed by a first network device, including:
receiving a second message transmitted from a first terminal, where the second message is used to request configuration information for a sidelink measurement gap (SL MG) of the first terminal; and
transmitting a third message to the first terminal based on the second message, where the third message carries the configuration information for the SL MG.

An embodiment of the present application further provides a first terminal, including a memory, a transceiver and a processor,
where the memory is used for storing a computer program, the transceiver is used for receiving and transmitting data under control of the processor, and the processor is used for reading the computer program in the memory and perform the following operations:
determining configuration information for a sidelink measurement gap (SL MG) of the first terminal; and
selecting resources outside a time range of the SL MG from a candidate resource set for data transmission based on the configuration information for the SL MG.

In an embodiment, determining configuration information for the SL MG of the first terminal includes:
receiving a first message transmitted from a second terminal, where the first message carries resource information of a sidelink positioning reference signal (SL PRS) and/or the configuration information for the SL MG; and
determining the configuration information for the SL MG based on the first message.

In an embodiment, in case that the first message carries the resource information of the SL PRS, determining the configuration information for the SL MG based on the first message includes:
determining the configuration information for the SL MG based on the resource information of the SL PRS.

In an embodiment, determining the configuration information for the SL MG based on the resource information of the SL PRS includes:
transmitting a second message to a first network device based on the resource information of the SL PRS, where the second message is used to request the configuration information for the SL MG; and
receiving a third message transmitted from the first network device, where the third message carries the configuration information for the SL MG.

In an embodiment, the second message carries one or more pieces of following information:
a universal set or subset of the resource information of the SL PRS;
a resource information identifier of the SL PRS;
a sidelink identifier of the first terminal and/or the second terminal; or
indication information for indicating to receive the SL PRS.

In an embodiment, after determining the configuration information for the SL MG, the operation further includes:
transmitting the configuration information for the SL MG to the second terminal.

In an embodiment, the configuration information for the SL MG includes one or more of the following:
a frequency point where SL PRS locates;
a measurement period and offset of SL PRS;
a measurement duration of SL PRS; or
a valid duration of the SL MG.

In an embodiment, the resource information of the SL PRS includes one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

In an embodiment, the first message includes any of the following:
a positioning protocol message for sidelink;
a signaling message for sidelink;
a radio resource control message for sidelink;
a media access control-control element (MAC CE) message for sidelink; or
physical layer scheduling control information for sidelink.

In an embodiment, the second message or the third message includes any of the following:
radio resource control message; or
media access control-control element (MAC CE) message.

An embodiment of the present application further provides a second terminal, including a memory, a transceiver and a processor,
where the memory is used for storing a computer program, the transceiver is used for receiving and transmitting data under control of the processor, and the processor is used for reading the computer program in the memory and perform the following operations:
transmitting a first message to a first terminal, where the first message carries resource information of a sidelink positioning reference signal (SL PRS) and/or configuration information for a sidelink measurement gap (SL MG) of the first terminal.

In an embodiment, the operation further includes:
receiving the configuration information for the SL MG transmitted from the first terminal.

In an embodiment, after receiving the configuration information for the SL MG transmitted from the first terminal, the operation further includes:
selecting resources outside a time range of the SL MG from a candidate resource set for transmitting data to the first terminal based on the configuration information for the SL MG.

An embodiment of the present application further provides a first network device, including a memory, a transceiver and a processor,
where the memory is used for storing a computer program, the transceiver is used for receiving and transmitting data under control of the processor, and the processor is used for reading the computer program in the memory and perform the following operations:
receiving a second message transmitted from a first terminal, where the second message is used to request configuration information for a sidelink measurement gap (SL MG) of the first terminal; and
transmitting a third message to the first terminal based on the second message, where the third message carries the configuration information for the SL MG.

An embodiment of the present application further provides an apparatus for resource selection, including:
a first determining unit, used for determining configuration information for a sidelink measurement gap (SL MG) of the first terminal; and
a first selecting unit, used for selecting resources outside a time range of the SL MG from a candidate resource set for data transmission based on the configuration information for the SL MG.

An embodiment of the present application further provides an apparatus for resource selection, including:
a second transmitting unit, used for transmitting a first message to a first terminal, where the first message carries resource information of a sidelink positioning reference signal (SL PRS) and/or configuration information for a sidelink measurement gap (SL MG) of the first terminal.

An embodiment of the present application further provides an apparatus for resource selection, including:
a third receiving unit, used for receiving a second message transmitted from a first terminal, where the second message is used to request configuration information for a sidelink measurement gap (SL MG) of the first terminal; and
a third transmitting unit, used for transmitting a third message to the first terminal based on the second message, where the third message carries the configuration information for the SL MG.

An embodiment of the present application further provides a computer-readable storage medium storing a computer program, where the computer program causes a computer to perform the above method for resource selection performed by the first terminal, or perform the above method for resource selection performed by the second terminal, or perform the above method for resource selection performed by the first network device.

An embodiment of the present application further provides a communication device storing a computer program, where the computer program causes the communication device to perform the above method for resource selection performed by the first terminal, or perform the above method for resource selection performed by the second terminal, or perform the above method for resource selection performed by the first network device.

An embodiment of the present application further provides a processor-readable storage medium storing a computer program, where the computer program causes a processor to perform the above method for resource selection performed by the first terminal, or perform the above method for resource selection performed by the second terminal, or perform the above method for resource selection performed by the first network device.

An embodiment of the present application further provides a chip product storing a computer program, where the computer program causes the chip product to perform the above method for resource selection performed by the first terminal, or perform the above method for resource selection performed by the second terminal, or perform the above method for resource selection performed by the first network device.

In the methods and apparatuses for resource selection, devices, and a storage medium provided by the embodiments of the present application, the first terminal may autonomously select resources outside the time range of the SL MG of the first terminal for data transmission, which avoids the problem of data packet loss or inability to transmit due to simultaneous SL PRS measurement and SL data transmission performed by the terminal, and ensures the success rate of data transmission.

### BRIEF DESCRIPTION OF THE DRAWINGS

In order to clearly illustrate the solutions disclosed in the embodiments of the present application or in the related art, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of a direct communication mode between terminals according to the related art;
FIG. 2 is a first schematic flowchart of a method for resource selection according to an embodiment of the present application;
FIG. 3 is a second schematic flowchart of a method for resource selection according to an embodiment of the present application;
FIG. 4 is a third schematic flowchart of a method for resource selection according to an embodiment of the present application;
FIG. 5 is a first schematic implementation diagram of a method for resource selection according to an embodiment of the present application;
FIG. 6 is a second schematic implementation diagram of a method for resource selection according to an embodiment of the present application;
FIG. 7 is a third schematic implementation diagram of a method for resource selection according to an embodiment of the present application;
FIG. 8 is a fourth schematic implementation diagram of a method for resource selection according to an embodiment of the present application;
FIG. 9 is a schematic structural diagram of a first terminal according to an embodiment of the present application;
FIG. 10 is a schematic structural diagram of a second terminal according to an embodiment of the present application;
FIG. 11 is a schematic structural diagram of a first network device according to an embodiment of the present application;
FIG. 12 is a first schematic structural diagram of an apparatus for resource selection according to an embodiment of the present application;
FIG. 13 is a second schematic structural diagram of an apparatus for resource selection according to an embodiment of the present application; and
FIG. 14 is a third schematic structural diagram of an apparatus for resource selection according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

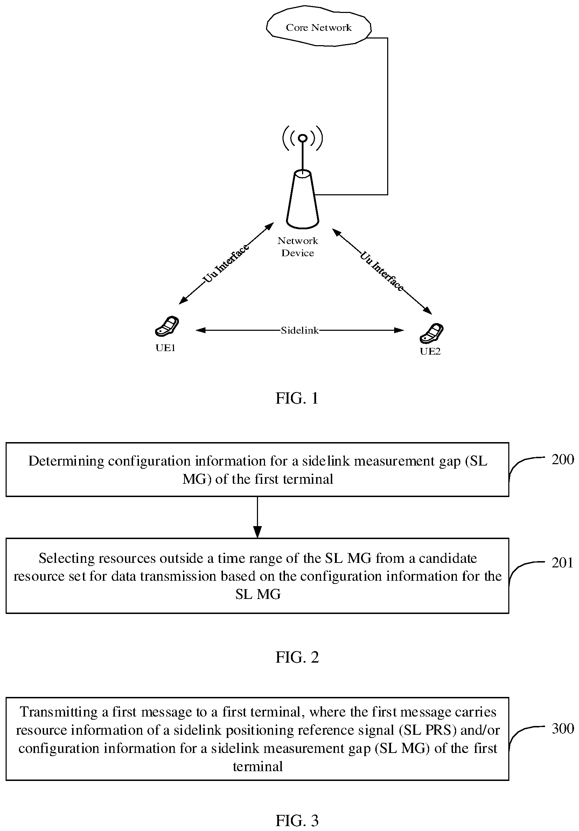

FIG. 1 is a schematic diagram of a direct communication mode between terminals according to the related art. As shown in FIG. 1, direct communication refers to a way in which neighboring terminals may perform data transmission within a close range through direct communication link. The radio interface corresponding to the direct communication link is called a direct communication interface, also known as sidelink interface, SL interface, or PC5 interface.

FIG. 2 is a first schematic flowchart of a method for resource selection according to an embodiment of the present application, where the method is performed by a first terminal. As shown in FIG. 2, the method includes the following steps.

Step 200: determining configuration information for a sidelink measurement gap (SL MG) of the first terminal.

In an embodiment, the first terminal may be a terminal that receives sidelink positioning reference signal (SL PRS), that is, a terminal that measures SL PRS. In the embodiments of the present application, the first terminal may autonomously select transmission resources, and since the terminal cannot simultaneously transmit sidelink (SL) or receive other SL channels during SL PRS measurement, the first terminal may first determine the configuration information for the SL MG of the first terminal before selecting the transmission resources.

In an embodiment, the configuration information for the SL MG may include one or more of the following:
(1) a frequency point where the SL PRS locates;
(2) a measurement period and offset of the SL PRS;
(3) a measurement duration of the SL PRS; or
(4) a valid duration of the SL MG.

Step 201: selecting resources outside a time range of the SL MG from a candidate resource set for data transmission based on the configuration information for the SL MG.

In an embodiment, after the first terminal determines the SL MG, in case of selecting transmission resources, the first terminal may select resources outside the time range of the SL MG from the candidate resource set as the transmission resources and use the selected transmission resources to transmit SL data.

In an embodiment, the candidate resource set may be a set of resources in a pre-configured resource pool, or may be a set of resources obtained through preliminary screening in the pre-configured resource pool (such as a set of resources with lower interference selected based on channel monitoring results), which is not limited herein.

In the method for resource selection provided by the embodiments of the present application, the first terminal may autonomously select resources outside the time range of the SL MG of the first terminal for data transmission, which avoids the problem of data packet loss or inability to transmit due to simultaneous SL PRS measurement and SL data transmission performed by the terminal, and ensures the success rate of data transmission.

In an embodiment, determining the configuration information for the SL MG of the first terminal includes:
receiving a first message transmitted from a second terminal, where the first message carries resource information of an SL PRS and/or configuration information for the SL MG; and
determining the configuration information for the SL MG based on the first message.

In an embodiment, the first terminal may determine the configuration information for the SL MG of the first terminal through various modes.

In an embodiment, the second terminal may be a terminal that transmits the SL PRS.

In an embodiment, the configuration information for the SL MG of the first terminal may be determined by the second terminal. After determining the configuration information for the SL MG of the first terminal, the second terminal carries the configuration information for the SL MG of the first terminal in the first message transmitted to the first terminal. As such, the first terminal may determine the configuration information for the SL MG based on the first message.

In an embodiment, the configuration information for the SL MG of the first terminal may be determined by other communication devices different from the second terminal, such as the first terminal or a serving network device for the first terminal. In this case, the second terminal may carry the resource information of the SL PRS in the first message transmitted to the first terminal without the configuration information for the SL MG of the first terminal. After receiving the first message, the first terminal determines the configuration information for the SL MG through other means based on the first message.

In an embodiment, the second terminal may carry the resource information of the SL PRS in the first message while transmitting the configuration information for the SL MG of the first terminal to the first terminal.

In an embodiment, the second terminal may transmit the configuration information for the SL MG of the first terminal and the resource information of the SL PRS to the first terminal through different messages.

In an embodiment, the resource information of the SL PRS may include one or more of the following.
(1) A positioning resource identifier (ID) of the SL PRS, which may be used to identify positioning resources for the SL PRS.
(2) Frequency domain resource information of the SL PRS, which may be used to indicate frequency domain resources for the SL PRS.
(3) Time domain resource information of the SL PRS, which may be used to indicate time domain resources for the SL PRS.
(4) A period of the SL PRS.
(5) A resource period type of the SL PRS. For example, the resource period type may include aperiodic (single), semi persistent (including period and offset, duration, the number of symbols, etc.), periodic (including period and offset, etc.), and corresponding spatial mapping relationship, etc.
   In an embodiment, the spatial mapping relationship corresponding to the SL PRS may include the spatial mapping relationship between the SL PRS and a synchronization signal block (SSB), a channel state information-reference signal (CSI-RS), a sidelink synchronization signal (SLSS), or other resources.
(6) A resource type of the SL PRS, for example, which indicates that the SL PRS resource information identifier corresponds to a sidelink channel state information-reference signal (SL CSI-RS) resource index or a SL PRS specific signal resource index.
(7) A resource bandwidth part (BWP) identifier of the SL PRS, which may be used to indicate the BWP where the SL PRS is located, where the number of the BWP may be one or more.
(8) Quasi co-location (QCL) information of the SL PRS.
(9) Activation time and/or duration of the SL PRS.
(10) a valid duration of the SL PRS.

In an embodiment, the first message may include any of the following:
(1) LTE positioning protocol (LPP) message for sidelink, which may also be referred to as sidelink LTE positioning protocol (SLPP) message or proximity communication port 5 LPP (PC5-LPP) message, etc.;
(2) a signaling message for sidelink;
(3) a radio resource control (RRC) message for sidelink, also known as PC5-RRC message;
(4) a media access control-control element (MAC CE) message for sidelink, also known as SL MAC CE message; or
(5) physical layer scheduling control information for sidelink.

In an embodiment, in case that the first message carries the resource information of the SL PRS, determining the configuration information for the SL MG based on the first message includes:
determining the configuration information for the SL MG based on the resource information of the SL PRS.

In an embodiment, in case that the first message carries the resource information of the SL PRS, the first terminal may autonomously determine the configuration information for the SL MG of the first terminal based on the resource information of the SL PRS transmitted from the second terminal, or determine the configuration information for the SL MG through other means.

For example, in case that the second terminal does not transmit the configuration information for the SL MG of the first terminal to the first terminal but instead transmits the resource information of the SL PRS, the first terminal may autonomously determine the configuration information for the SL MG of the first terminal based on the resource information of the SL PRS transmitted from the second terminal, or determine the configuration information for the SL MG through other means.

In an embodiment, determining the configuration information for the SL MG based on the resource information of the SL PRS includes:
transmitting a second message to a first network device based on the resource information of the SL PRS, where the second message is used to request the configuration information for the SL MG; and
receiving a third message transmitted from the first network device, where the third message carries the configuration information for the SL MG.

In an embodiment, the first network device may be a serving network device for the first terminal, such as a serving base station of the first terminal.

In case that the first message carries the resource information of the SL PRS, the first terminal may transmit a second message to the first network device based on the resource information of the SL PRS transmitted from the second terminal, where the second message is used to request the configuration information for the SL MG of the first terminal.

After receiving the second message, the first network device may determine the configuration information for the SL MG of the first terminal based on the second message and transmit the configuration information for the SL MG to the first terminal.

In an embodiment, the second message may carry one or more pieces of the following information.
(1) A universal set or subset of the resource information of the SL PRS. That is to say, the first terminal may transmit all the resource information of the SL PRS received from the second terminal to the first network device, or transmit some of the resource information of the SL PRS received from the second terminal to the first network device.
(2) A resource information identifier of the SL PRS, which may be used to indicate the resource information of the SL PRS.
(3) An SL identifier of the first terminal and/or the second terminal. For example, the SL identifier may be a layer 2 identifier (L2 ID) of the first terminal and/or the second terminal.
(4) Indication information for indicating to receive the SL PRS, which may be used to indicate that the first terminal is the terminal receiving the SL PRS.

In an embodiment, the second message or the third message may include any of the following.

### (1) A radio resource control (RRC) message

For example, the second message may be a *SidelinkUEinformationNR* (SUI) message, a *UEAssistanceInformation* (UAI) message, a *LocationMeasurementIndication* message, an *RRCSetupRequest* message, an *RRCSetupComplete* message, an *RRCResumeRequest* message, an *RRCResumeRequest1* message, an *RRCResumeComplete* message, an *RRCReestablishmentRequest* message, an *RRCReestablishmentComplete* message, or other RRC messages, etc.

For example, the third message may be an *RRCReestablishment* message, an *RRCReconfiguration* message, an *RRCResume* message, an *RRCSetup* message, an *RRCRelease* message, or other RRC messages, etc.

### (2) A media access control-control element (MAC CE) message

For example, the second message may be SL PRS information MAC CE or other MAC CE messages, etc.

For example, the third message may be an SL MG MAC CE message or other MAC CE messages, etc.

In an embodiment, after determining the configuration information for the SL MG, the method further includes:
transmitting the configuration information for the SL MG to the second terminal.

In an embodiment, after the first terminal determines the configuration information for the SL MG of the first terminal, the first terminal may transmit the configuration information for the SL MG to the second terminal to notify the second terminal of the configuration information for the SL MG of the first terminal.

For example, in case that the first terminal autonomously determines the configuration information for the SL MG or requests the configuration information for the SL MG from the first network device, after the first terminal determines the configuration information for the SL MG of the first terminal, the first terminal may transmit the configuration information for the SL MG to the second terminal. After receiving the configuration information for the SL MG of the first terminal, the second terminal may select the transmission resources based on the configuration information for the SL MG of the first terminal when the second terminal needs to transmit SL data to the first terminal. For example, resources outside the time range of the SL MG of the first terminal may be selected to transmit data to the first terminal, to avoid the problem of data packet loss or inability to transmit due to simultaneous SL PRS measurement and SL data reception by the terminal, and ensure the success rate of data transmission.

In an embodiment, the message used by the first terminal to transmit the configuration information for the SL MG to the second terminal may include any of the following:
(1) an LPP message for sidelink, which may also be referred to as SLPP message or PC5-LPP message, etc.;
(2) a signaling message for sidelink;
(3) an RRC message for sidelink, which may also be referred to as PC5-RRC messages;
(4) a MAC CE message for sidelink, which may also be referred to as SL MAC CE message; or
(5) a physical layer scheduling control information for sidelink.

FIG. 3 is a second schematic flowchart of a method for resource selection according to an embodiment of the present application, where the method is performed by a second terminal. As shown in FIG. 3, the method includes the following steps.

Step 300: transmitting a first message to a first terminal, where the first message carries resource information of a sidelink positioning reference signal (SL PRS) and/or configuration information for a sidelink measurement gap (SL MG) of the first terminal.

In an embodiment, the first terminal may be a terminal that receives the SL PRS (i.e. measures the SL PRS), and the second terminal may be a terminal that transmits the SL PRS.

In the embodiments of the present application, the first terminal may autonomously select transmission resources, and since the terminal cannot simultaneously transmit sidelink (SL) or receive other SL channels during SL PRS measurement, the first terminal may first determine the configuration information for the SL MG of the first terminal before selecting the transmission resources, and then select resources outside a time range of the SL MG from a candidate resource set for data transmission when selecting the transmission resources.

For this purpose, the second terminal may transmit the first message to the first terminal, where the first message carries the resource information of the SL PRS and/or the configuration information for the SL MG of the first terminal

In an embodiment, the first message carries the configuration information for the SL MG of the first terminal, that is, the second terminal may determine the configuration information for the SL MG of the first terminal, and carry the configuration information for the SL MG of the first terminal in the first message transmitted to the first terminal. As such, the first terminal may determine the configuration information for the SL MG of the first terminal based on the first message.

In an embodiment, the first message does not carry the configuration information for the SL MG of the first terminal, that is, the configuration information for the SL MG of the first terminal may be determined by other communication devices different from the second terminal (such as the first terminal or the serving network device for the first terminal). In this case, the second terminal may carry the resource information of the SL PRS in the first message transmitted to the first terminal. After receiving the resource information of the SL PRS carried in the first message, the first terminal may determine the configuration information for the SL MG of the first terminal through other means based on the resource information of the SL PRS (such as autonomous determination or requesting configuration from the serving network device for the first terminal).

In an embodiment, the second terminal may carry the resource information of the SL PRS in the first message while transmitting the configuration information for the SL MG of the first terminal to the first terminal.

In an embodiment, the second terminal may transmit the configuration information for the SL MG of the first terminal and the resource information of the SL PRS to the first terminal through different messages.

In an embodiment, the configuration information for the SL MG may include one or more of the following:
(1) a frequency point where the SL PRS locates;
(2) a measurement period and offset of the SL PRS;
(3) a measurement duration of the SL PRS; or
(4) a valid duration of the SL MG.

In an embodiment, the resource information of the SL PRS may include one or more of the following.
(1) A positioning resource identifier (ID) of the SL PRS, which may be used to identify positioning resources for the SL PRS.
(2) Frequency domain resource information of the SL PRS, which may be used to indicate frequency domain resources for the SL PRS.
(3) Time domain resource information of the SL PRS, which may be used to indicate time domain resources for the SL PRS.
(4) A period of the SL PRS.
(5) A resource period type of the SL PRS. For example, the resource period type may include aperiodic (single), semi persistent (including period and offset, duration, the number of symbols, etc.), periodic (including period and offset, etc.), and corresponding spatial mapping relationship, etc.
   In an embodiment, the spatial mapping relationship corresponding to the SL PRS may include the spatial mapping relationship between the SL PRS and synchronization signal block (SSB), channel state information-reference signal (CSI-RS), sidelink synchronization signal (SLSS), or other resources.
(6) A resource type of the SL PRS, for example, which indicates that the SL PRS resource information identifier corresponds to sidelink channel state information-reference signal (SL CSI-RS) resource index or SL PRS specific signal resource index.
(7) A resource bandwidth part (BWP) identifier of the SL PRS, which may be used to indicate the BWP where the SL PRS is located, and the number of the BWP may be one or more.
(8) Quasi co-location (QCL) information of the SL PRS.
(9) Activation time and/or duration of the SL PRS.
(10) a valid duration of the SL PRS.

In an embodiment, the first message may include any of the following:
(1) LTE positioning protocol (LPP) message for sidelink, which may also be referred to as sidelink LTE positioning protocol (SLPP) message or proximity communication port 5 LPP (PC5-LPP) message, etc.;
(2) a signaling message for sidelink;
(3) a radio resource control (RRC) message for sidelink, also known as PC5-RRC message;
(4) a media access control-control element (MAC CE) message for sidelink, also known as SL MAC CE message; or
(5) physical layer scheduling control information for sidelink.

In the method for resource selection provided by the embodiments of the present application, the second terminal transmits the resource information of the SL PRS and/or the configuration information for the SL MG of the first terminal to the first terminal, and then the first terminal determines the configuration information for the SL MG of the first terminal based on that. The first terminal may autonomously select resources outside the time range of the SL MG of the first terminal for data transmission when selecting the transmission resources, to avoid the problem of data packet loss or inability to transmit due to simultaneous SL PRS measurement and SL data transmission performed by the terminal, and ensure the success rate of data transmission.

In an embodiment, the method further includes:
receiving the configuration information for the SL MG transmitted from the first terminal.

In an embodiment, after the first terminal determines the configuration information for the SL MG of the first terminal, the first terminal may transmit the configuration information for the SL MG to the second terminal to notify the second terminal of the configuration information for the SL MG of the first terminal.

For example, in case that the first terminal autonomously determines the configuration information for the SL MG or requests the configuration information for the SL MG from the first network device, after the first terminal determines the configuration information for the SL MG of the first terminal, the first terminal may transmit the configuration information for the SL MG to the second terminal, to facilitate the second terminal may use it as a reference when selecting transmission resources.

In an embodiment, after receiving the configuration information for the SL MG transmitted from the first terminal, the method further includes:
selecting resources outside a time range of the SL MG from a candidate resource set for transmitting data to the first terminal based on the configuration information for the SL MG.

In an embodiment, after receiving the configuration information for the SL MG of the first terminal, the second terminal may select the transmission resources based on the configuration information for the SL MG of the first terminal when the second terminal needs to transmit SL data to the first terminal. For example, resources outside the time range of the SL MG of the first terminal may be selected to transmit data to the first terminal, to avoid the problem of data packet loss or inability to transmit due to simultaneous SL PRS measurement and SL data reception performed by the terminal, and ensure the success rate of data transmission.

In an embodiment, in case that the configuration information for the SL MG of the first terminal is determined by the second terminal, the second terminal does not need to receive the configuration information for the SL MG of the first terminal transmitted from the first terminal, but may autonomously select the transmission resources based on the configuration information for the SL MG of the first terminal, such as select resources outside the time range of the SL MG of the first terminal to transmit data to the first terminal.

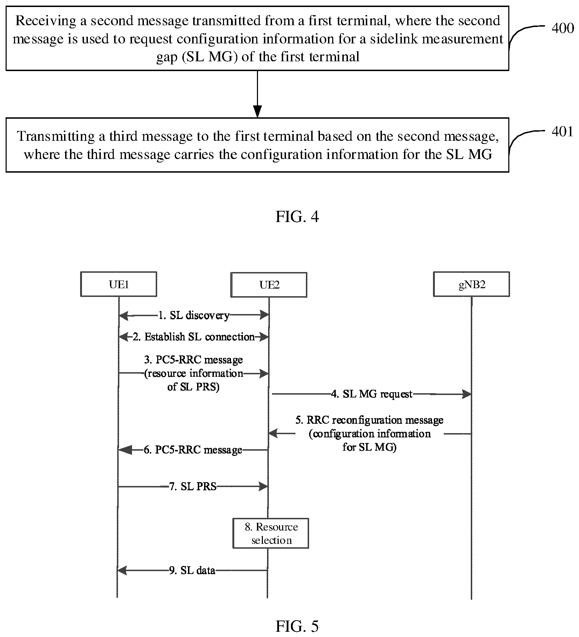

FIG. 4 is a third schematic flowchart of a method for resource selection according to an embodiment of the present application, where the method is performed by a first network device. As shown in FIG. 4, the method includes the following steps:
step 400: receiving a second message transmitted from a first terminal, where the second message is used to request configuration information for a sidelink measurement gap (SL MG) of the first terminal; and
step 401: transmitting a third message to the first terminal based on the second message, where the third message carries the configuration information for the SL MG.

In an embodiment, the first network device may be a serving network device for the first terminal, such as a serving base station of the first terminal.

In the embodiments of the present application, the first terminal may autonomously select transmission resources, and since the terminal cannot simultaneously transmit sidelink (SL) or receive other SL channels during sidelink positioning reference signal (SL PRS) measurement, the first terminal may first determine the configuration information for the SL MG of the first terminal before selecting the transmission resources, and then select resources outside a time range of the SL MG from a candidate resource set for data transmission when selecting the transmission resources.

For this purpose, the first terminal may transmit the second message to the first network device, where the second message is used to request the configuration information for the SL MG of the first terminal.

In an embodiment, the second message may carry one or more pieces of the following information.
(1) A universal set or subset of resource information of the SL PRS. That is to say, the first terminal may transmit all the resource information of the SL PRS received from the second terminal to the first network device, or transmit some of the resource information of the SL PRS received from the second terminal to the first network device.
(2) A resource information identifier of the SL PRS, which may be used to indicate the resource information of the SL PRS.
(3) An SL identifier of the first terminal and/or the second terminal. For example, the SL identifier may be the layer 2 identifier (L2 ID) of the first terminal and/or the second terminal.
(4) Indication information for indicating to receive the SL PRS, which may be used to indicate that the first terminal is the terminal receiving the SL PRS.

In an embodiment, the resource information of the SL PRS may include one or more of the following.
(1) A positioning resource identifier (ID) of the SL PRS, which may be used to identify positioning resources for the SL PRS.
(2) Frequency domain resource information of the SL PRS, which may be used to indicate frequency domain resources for the SL PRS.
(3) Time domain resource information of the SL PRS, which may be used to indicate time domain resources for the SL PRS.
(4) A period of the SL PRS.
(5) A resource period type of the SL PRS. For example, the resource period type may include aperiodic (single), semi persistent (including period and offset, duration, the number of symbols, etc.), periodic (including period and offset, etc.), and corresponding spatial mapping relationship, etc.
   In an embodiment, the spatial mapping relationship corresponding to the SL PRS may include the spatial mapping relationship between the SL PRS and a synchronization signal block (SSB), a channel state information-reference signal (CSI-RS), a sidelink synchronization signal (SLSS), or other resources.
(6) A resource type of the SL PRS, for example, which indicates that the SL PRS resource information identifier corresponds to sidelink channel state information-reference signal (SL CSI-RS) resource index or SL PRS specific signal resource index.
(7) A resource bandwidth part (BWP) identifier of the SL PRS, which may be used to indicate the BWP where the SL PRS is located, and the number of the BWP may be one or more.
(8) Quasi co-location (QCL) information of the SL PRS.
(9) Activation time and/or duration of the SL PRS.
(10) a valid duration of the SL PRS.

After receiving the second message, the first network device determines the configuration information for the SL MG of the first terminal based on the second message, and transmits the configuration information for the SL MG to the first terminal. As such, the first terminal may select resources outside the time range of the SL MG from the candidate resource set for data transmission based on the configuration information for the SL MG when selecting the transmission resources.

In an embodiment, the configuration information for the SL MG may include one or more of the following:
(1) a frequency point where the SL PRS locates;
(2) a measurement period and offset of the SL PRS;
(3) a measurement duration of the SL PRS; or
(4) a valid duration of the SL MG.

In an embodiment, the second message or the third message may include any of the following.

### (1) A radio resource control (RRC) message

For example, the second message may be a *SidelinkUEinformationNR* (SUI) message, a *UEAssistanceInformation* (UAI) message, a *LocationMeasurementIndication* message, an *RRCSetupRequest* message, an *RRCSetupComplete* message, an *RRCResumeRequest* message, an *RRCResumeRequest1* message, an *RRCResumeComplete* message, an *RRCReestablishmentRequest* message, an *RRCReestablishmentComplete* message, or other RRC messages, etc.

For example, the third message may be an *RRCReestablishment* message, an *RRCReconfiguration* message, an *RRCResume* message, an *RRCSetup* message, an *RRCRelease* message, or other RRC messages, etc.

### (2) A media access control-control element (MAC CE) message

For example, the second message may be SL PRS information MAC CE or other MAC CE messages, etc.

For example, the third message may be an SL MG MAC CE message or other MAC CE messages, etc.

The methods provided by various embodiments of the present application are based on the same conception, the implementation of each method may be referred to each other, and the repetition is not described again.

The following examples illustrate the methods provided in the above embodiments of the present application through specific application scenarios.

Embodiment 1: FIG. 5 is a first schematic implementation diagram of a method for resource selection according to an embodiment of the present application. As shown in FIG. 5, UE1 and UE2 perform SL communication and SL positioning, and UE1 transmits SL PRS, UE2 receives SL PRS, the network device configures SL MG for UE, SL resource determination mode of UE2 is autonomous resource selection, and UE2 has SL data for transmission. The main procedure includes the following steps.

Step 1: UE1 and UE2 discover each other through the SL discovery procedure.

Step 2: UE1 and UE2 establish an SL unicast connection.

Step 3: UE1 transmits the resource information of SL PRS to UE2 through PC5-RRC message, for example, the resource information of the SL PRS is transmitted to UE2 through *RRCReconfigurationSidelink* message, where the SL PRS is transmitted periodically.

Step 4: UE2 requests SL MG from gNB2, and the request message may include the received resource information of SL PRS. For example, UE2 uses *SidelinkUEinformationNR* message to request SL MG from gNB2, which includes the resource information of SL PRS, the SL identifier of UE2 and/or UE1, SL PRS type, etc.

Step 5: gNB2 configures SL MG for UE2 and transmits the SL MG to UE2 through *RRCReconfiguration* message.

Step 6: UE2 transmits a PC5-RRC message to UE1, such as an *RRCReconfigurationSidelinkComplete* message, which may carry the configuration information for the SL MG for UE2.

Step 7: UE1 periodically uses SL PRS resources to transmit SL PRSs to UE2, and UE2 receives the signals and performs SL PRS measurement.

Step 8: UE2 has SL data to be transmitted, and UE2 selects resources, where the selected transmission resources are located outside of the SL MG of the UE2.

Step 9: UE2 uses the SL resources selected in step 8 to transmit SL data.

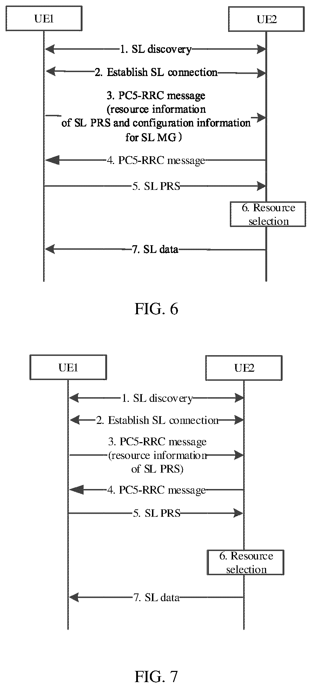

Embodiment 2: FIG. 6 is a second schematic implementation diagram of a method for resource selection according to an embodiment of the present application. As shown in FIG. 6, UE1 and UE2 perform SL communication and SL positioning, and UE1 transmits SL PRS, UE2 receives SL PRS, UE1 configures SL MG for UE2, SL resource determination mode of UE2 is autonomous resource selection, and UE2 has SL data for transmission. The main procedure includes the following steps.

Step 1: UE1 and UE2 discover each other through SL discovery procedure.

Step 2: UE1 and UE2 establish an SL unicast connection.

Step 3: UE1 transmits the resource information of SL PRS and the configuration information for the SL MG for UE2 to UE2 through PC5-RRC message, for example, the resource information of SL PRS and the configuration information for the SL MG for UE2 are transmitted to UE2 through *RRCReconfigurationSidelink* message, where the SL PRS is transmitted periodically.

Step 4: UE2 transmits a PC5-RRC message to UE1, such as an *RRCReconfigurationSidelinkComplete* message.

Step 5: UE1 periodically uses SL PRS resources to transmit SL PRSs to UE2, and UE2 receives the signals and performs SL PRS measurement.

Step 6: UE2 has SL data to be transmitted, and UE2 selects resources, where the selected transmission resources are located outside of the SL MG of the UE2.

Step 7: UE2 uses the SL resources selected in step 6 to transmit SL data.

Embodiment 3: FIG. 7 is a third schematic implementation diagram of a method for resource selection according to an embodiment of the present application. As shown in FIG. 7, UE1 and UE2 perform SL communication and SL positioning, and UE1 transmits SL PRS, UE2 receives SL PRS, UE2 configures SL MG by itself, SL resource determination mode of UE2 is autonomous resource selection, and UE2 has SL data for transmission. The main procedure includes the following steps.

Step 1: UE1 and UE2 discover each other through SL discovery procedure.

Step 2: UE1 and UE2 establish an SL unicast connection.

Step 3: UE1 transmits the resource information of SL PRS to UE2 through PC5-RRC message, for example, the resource information of SL PRS is transmitted to UE2 through *RRCReconfigurationSidelink* message, where the SL PRS is transmitted periodically.

Step 4: UE2 transmits a PC5-RRC message to UE1, such as an *RRCReconfigurationSidelinkComplete* message, which may include the configuration information for the SL MG for UE2.

Step 5: UE1 periodically uses SL PRS resources to transmit SL PRSs to UE2, and UE2 receives the signals and performs SL PRS measurement.

Step 6: UE2 has SL data to be transmitted, and UE2 selects resources, where the selected transmission resources are located outside of the SL MG of the UE2.

Step 7: UE2 uses the SL resources selected in step 6 to transmit SL data.

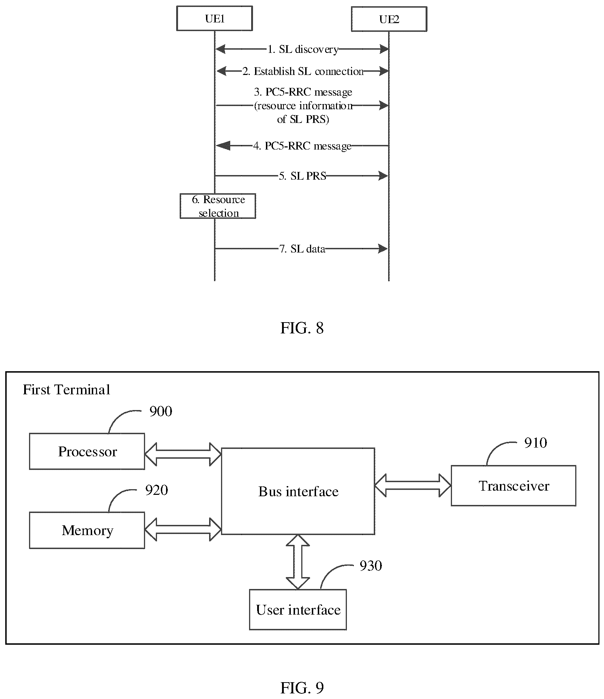

Embodiment 4: FIG. 8 is a fourth schematic implementation diagram of a method for resource selection according to an embodiment of the present application. As shown in FIG. 8, UE1 and UE2 perform SL communication and SL positioning, and UE1 transmits SL PRS, UE2 receives SL PRS, UE2 configures SL MG by itself, SL resource determination mode of UE2 is autonomous resource selection, and UE1 has SL data for transmission. The main procedure includes the following steps.

Step 1: UE1 and UE2 discover each other through SL discovery procedure.

Step 2: UE1 and UE2 establish an SL unicast connection.

Step 3: UE1 transmits the resource information of SL PRS to UE2 through PC5-RRC message, for example, the resource information of SL PRS is transmitted to UE2 through *RRCReconfigurationSidelink* message, where the SL PRS is transmitted periodically.

Step 4: UE2 transmits a PC5-RRC message to UE1, such as an *RRCReconfigurationSidelinkComplete* message, which may include the configuration information for the SL MG for UE2.

Step 5: UE1 periodically uses SL PRS resources to transmit SL PRSs to UE2, and UE2 receives the signals and performs SL PRS measurement.

Step 6: UE1 has SL data to be transmitted between UE1 and UE2, and UE1 selects resources, where the selected transmission resources are located outside of the SL MG of the UE2.

Step 7: UE1 uses the SL resources selected in step 6 to transmit SL data to UE2.

The methods and apparatuses provided in various embodiments of the present application are based on the same conception. As the principles of solving problems by the methods and apparatuses are similar, the implementation of the apparatuses and methods may be referred to each other, and the same parts are not repeated.

FIG. 9 is a schematic structural diagram of a first terminal according to an embodiment of the present application. As shown in FIG. 9, the first terminal includes a memory 920, a transceiver 910, and a processor 900, where the processor 900 and memory 920 may also be arranged separately in physical.

The memory 920 is used for storing a computer program, and the transceiver 910 is used for receiving and transmitting data under control of the processor 900.

The transceiver 910 is used for transmitting and receiving data under control of the processor 900.

In FIG. 9, a bus architecture may include any number of interconnected buses and bridges, which are linked together through various circuits of one or more processors represented by the processor 900 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 910 may include multiple elements, i.e., including a transmitter and a receiver, units for providing communication with various other devices over transmission media including wireless channels, wired channels, fiber optic cables, and the like. For different user equipment, a user interface 930 may be an interface capable of externally or internally connecting the required equipment, and the connected equipment includes, but not limited to, a small keypad, a display, a speaker, a microphone, a joystick, and the like.

The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic device (CPLD), the processor may also use a multi-core architecture.

The processor 900 calls the computer program stored in the memory 920 to execute any of the methods performed by the first terminal provided by the embodiments of the present application in accordance with the obtained executable instructions. For example, the method includes: determining configuration information for a sidelink measurement gap (SL MG) of the first terminal; and selecting resources outside a time range of the SL MG from a candidate resource set for data transmission based on the configuration information for the SL MG.

In an embodiment, determining configuration information for the SL MG of the first terminal includes:
receiving a first message transmitted from a second terminal, where the first message carries resource information of a sidelink positioning reference signal (SL PRS) and/or the configuration information for the SL MG; and
determining the configuration information for the SL MG based on the first message.

In an embodiment, in case that the first message carries the resource information of the SL PRS, determining the configuration information for the SL MG based on the first message includes:
determining the configuration information for the SL MG based on the resource information of the SL PRS.

In an embodiment, determining the configuration information for the SL MG based on the resource information of the SL PRS includes:
transmitting a second message to a first network device based on the resource information of the SL PRS, where the second message is used to request the configuration information for the SL MG; and
receiving a third message transmitted from the first network device, where the third message carries the configuration information for the SL MG.

In an embodiment, the second message carries one or more pieces of following information:
a universal set or subset of the resource information of the SL PRS;
a resource information identifier of the SL PRS;
a sidelink identifier of the first terminal and/or the second terminal; or
indication information for indicating to receive the SL PRS.

In an embodiment, after determining the configuration information for the SL MG, the method further includes:
transmitting the configuration information for the SL MG to the second terminal.

In an embodiment, the configuration information for the SL MG includes one or more of the following:
a frequency point where SL PRS locates;
a measurement period and offset of SL PRS;
a measurement duration of SL PRS; or
a valid duration of the SL MG.

In an embodiment, the resource information of the SL PRS includes one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

In an embodiment, the first message includes any of the following:
a positioning protocol message for sidelink;
a signaling message for sidelink;
a radio resource control message for sidelink;
a media access control-control element (MAC CE) message for sidelink; or
physical layer scheduling control information for sidelink.

In an embodiment, the second message or the third message includes any of the following:
radio resource control message; or
media access control-control element (MAC CE) message.

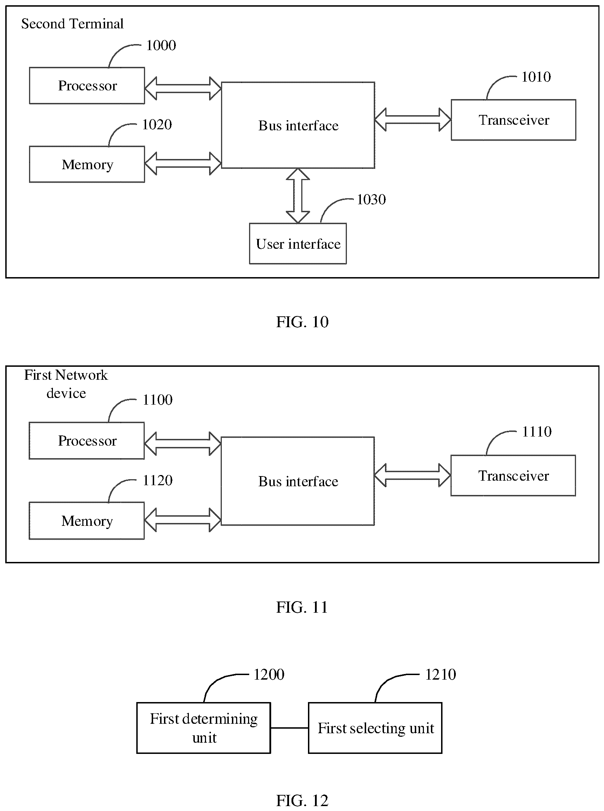

FIG. 10 is a schematic structural diagram of a second terminal according to an embodiment of the present application. As shown in FIG. 10, the second terminal includes a memory 1020, a transceiver 1010, and a processor 1000, where the processor 1000 and memory 1020 may also be arranged separately in physical.

The memory 1020 is used for storing a computer program, and the transceiver 1010 is used for receiving and transmitting data under control of the processor 1000.

The transceiver 1010 is used for transmitting and receiving data under control of the processor 1000.

In FIG. 10, a bus architecture may include any number of interconnected buses and bridges, which are linked together through various circuits of one or more processors represented by the processor 1000 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1010 may include multiple elements, i.e., including a transmitter and a receiver, units for providing communication with various other devices over transmission media including wireless channels, wired channels, fiber optic cables, and the like. For different user equipment, a user interface 1030 may be an interface capable of externally or internally connecting the required equipment, and the connected equipment includes, but not limited to, a small keypad, a display, a speaker, a microphone, a joystick, and the like.

The processor 1000 is responsible for managing the bus architecture and general processing, and the memory 1020 may store data used by the processor 1000 when performing operations.

The processor 1000 may be a central processing unit (CPU), an application specific integrated circuit (ASIC), a field-programmable gate array (FPGA), or a complex programmable logic device (CPLD), the processor may also use a multi-core architecture.

The processor 1000 calls the computer program stored in the memory 1020 to execute any of the methods performed by the second terminal provided by the embodiments of the present application in accordance with the obtained executable instructions. For example, the method includes: transmitting a first message to a first terminal, where the first message carries resource information of a sidelink positioning reference signal (SL PRS) and/or configuration information for a sidelink measurement gap (SL MG) of the first terminal.

In an embodiment, the method further includes:
receiving the configuration information for the SL MG transmitted from the first terminal.

In an embodiment, after receiving the configuration information for the SL MG transmitted from the first terminal, the method further includes:
selecting resources outside a time range of the SL MG from a candidate resource set for transmitting data to the first terminal based on the configuration information for the SL MG.

FIG. 11 is a schematic structural diagram of a first network device according to an embodiment of the present application. As shown in FIG. 11, the first network device includes a memory 1120, a transceiver 1110, and a processor 1100, where the processor 1100 and memory 1120 may also be arranged separately in physical.

The memory 1120 is used for storing a computer program, and the transceiver 1110 is used for receiving and transmitting data under control of the processor 1100.

The transceiver 1110 is used for transmitting and receiving data under control of the processor 1100.

In FIG. 11, a bus architecture may include any number of interconnected buses and bridges, which are linked together through various circuits of one or more processors represented by the processor 1100 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1110 may include multiple elements, i.e., including a transmitter and a receiver, units for providing communication with various other devices over transmission media including wireless channels, wired channels, fiber optic cables, and the like.

The processor 1100 is responsible for managing the bus architecture and general processing, and the memory 1120 may store data used by the processor 1100 when performing operations.

The processor 1100 may be a central processing unit (CPU), an application specific integrated circuit (ASIC), a field-programmable gate array (FPGA), or a complex programmable logic device (CPLD), the processor may also use a multi-core architecture.

The processor 1100 calls the computer program stored in the memory 1120 to execute any of the methods performed by the first network device provided by the embodiments of the present application in accordance with the obtained executable instructions. For example, the method includes: receiving a second message transmitted from a first terminal, where the second message is used to request configuration information for a sidelink measurement gap (SL MG) of the first terminal; and transmitting a third message to the first terminal based on the second message, where the third message carries the configuration information for the SL MG.

It should be noted here that the above terminal and network device provided in the embodiments of the present application may implement all the method steps implemented by the above method embodiments, and may achieve the same effect. The same parts and beneficial effects as the same method embodiments are not repeated in the present application.

FIG. 12 is a first schematic structural diagram of an apparatus for resource selection according to an embodiment of the present application. As shown in FIG. 12, the apparatus includes:
a first determining unit 1200, used for determining configuration information for a sidelink measurement gap (SL MG) of the first terminal; and
a first selecting unit 1210, used for selecting resources outside a time range of the SL MG from a candidate resource set for data transmission based on the configuration information for the SL MG.

In an embodiment, determining configuration information for the SL MG of the first terminal includes:
receiving a first message transmitted from a second terminal, where the first message carries resource information of a sidelink positioning reference signal (SL PRS) and/or the configuration information for the SL MG; and
determining the configuration information for the SL MG based on the first message.

In an embodiment, in case that the first message carries the resource information of the SL PRS, determining the configuration information for the SL MG based on the first message includes:
determining the configuration information for the SL MG based on the resource information of the SL PRS.

In an embodiment, determining the configuration information for the SL MG based on the resource information of the SL PRS includes:
transmitting a second message to a first network device based on the resource information of the SL PRS, where the second message is used to request the configuration information for the SL MG; and
receiving a third message transmitted from the first network device, where the third message carries the configuration information for the SL MG.

In an embodiment, the second message carries one or more pieces of following information:
a universal set or subset of the resource information of the SL PRS;
a resource information identifier of the SL PRS;
a sidelink identifier of the first terminal and/or the second terminal; or
indication information for indicating to receive the SL PRS.

In an embodiment, the apparatus further includes a first transmitting unit, where the first transmitting unit is used for:
transmitting the configuration information for the SL MG to the second terminal.

In an embodiment, the configuration information for the SL MG includes one or more of the following:
a frequency point where SL PRS locates;
a measurement period and offset of SL PRS;
a measurement duration of SL PRS; or
a valid duration of the SL MG.

In an embodiment, the resource information of the SL PRS includes one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

In an embodiment, the first message includes any of the following:
a positioning protocol message for sidelink;
a signaling message for sidelink;
a radio resource control message for sidelink;
a media access control-control element (MAC CE) message for sidelink; or
physical layer scheduling control information for sidelink.

In an embodiment, the second message or the third message includes any of the following:
radio resource control message; or
media access control control element message.

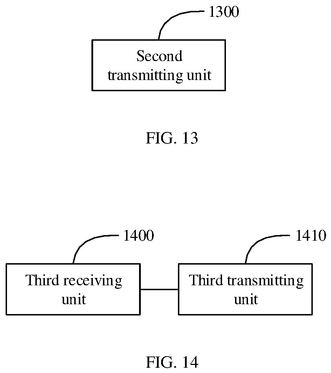

FIG. 13 is a second schematic structural diagram of an apparatus for resource selection according to an embodiment of the present application. As shown in FIG. 13, the apparatus includes:
a second transmitting unit 1300, used for transmitting a first message to a first terminal, where the first message carries resource information of a sidelink positioning reference signal (SL PRS) and/or configuration information for a sidelink measurement gap (SL MG) of the first terminal.

In an embodiment, the apparatus further includes a second receiving unit, where the second receiving unit is used for:
receiving the configuration information for the SL MG transmitted from the first terminal.

In an embodiment, the apparatus further includes a second selecting unit, where the second selecting unit is used for:
selecting resources outside a time range of the SL MG from a candidate resource set for transmitting data to the first terminal based on the configuration information for the SL MG.

FIG. 14 is a third schematic structural diagram of an apparatus for resource selection according to an embodiment of the present application. As shown in FIG. 14, the apparatus includes:
a third receiving unit 1400, used for receiving a second message transmitted from a first terminal, where the second message is used to request configuration information for a sidelink measurement gap (SL MG) of the first terminal; and
a third transmitting unit 1410, used for transmitting a third message to the first terminal based on the second message, where the third message carries the configuration information for the SL MG.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

On the other hand, an embodiment of the present application further provides a computer readable storage medium storing a computer program that cause a computer to perform any of the methods for resource selection described in the various embodiments of the present application.

It should be noted here that the computer readable storage medium according to the embodiments of the present application may implement all the method steps implemented by the above method embodiments, and may achieve the same effect. The same parts and beneficial effects as the same method embodiments are not repeated here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for resource selection, performed by a first terminal, comprising:
determining configuration information for a sidelink measurement gap, SL MG, of the first terminal; and
selecting resources outside a time range of the SL MG from a candidate resource set for data transmission based on the configuration information for the SL MG.

2. The method of claim 1, wherein determining configuration information for the SL MG of the first terminal comprises:
receiving a first message transmitted from a second terminal, wherein the first message carries resource information of a sidelink positioning reference signal, SL PRS, and/or the configuration information for the SL MG; and
determining the configuration information for the SL MG based on the first message.

3. The method of claim 2, wherein in case that the first message carries the resource information of the SL PRS, determining the configuration information for the SL MG based on the first message comprises:
determining the configuration information for the SL MG based on the resource information of the SL PRS.

4. The method of claim 3, wherein determining the configuration information for the SL MG based on the resource information of the SL PRS comprises:
transmitting a second message to a first network device based on the resource information of the SL PRS, wherein the second message is used to request the configuration information for the SL MG; and
receiving a third message transmitted from the first network device, wherein the third message carries the configuration information for the SL MG.

5. The method of claim 4, wherein the second message carries one or more pieces of following information:
a universal set or subset of the resource information of the SL PRS;
a resource information identifier of the SL PRS;
a sidelink identifier of the first terminal and/or the second terminal; or
indication information for indicating to receive the SL PRS.

6. The method of claim 1, wherein after determining the configuration information for the SL MG, the method further comprises:
transmitting the configuration information for the SL MG to the second terminal.

7. The method of any of claims 1 to 6, wherein the configuration information for the SL MG comprises one or more of the following:
a frequency point where a sidelink positioning reference signal, SL PRS, locates;
a measurement period and offset of a sidelink positioning reference signal, SL PRS;
a measurement duration of a sidelink positioning reference signal, SL PRS; or
a valid duration of the SL MG.

8. The method of any of claims 2 to 5, wherein the resource information of the SL PRS comprises one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

9. The method of claim 2, wherein the first message comprises any of the following:
a positioning protocol message for sidelink;
a signaling message for sidelink;
a radio resource control message for sidelink;
a media access control-control element, MAC CE, message for sidelink; or
physical layer scheduling control information for sidelink.

10. The method of claim 4, wherein the second message or the third message comprises any of the following:
radio resource control message; or
media access control-control element, MAC CE, message.

11. A method for resource selection, performed by a second terminal, comprising:
transmitting a first message to a first terminal, wherein the first message carries resource information of a sidelink positioning reference signal, SL PRS, and/or configuration information for a sidelink measurement gap, SL MG, of the first terminal.

12. The method of claim 11, further comprising:
receiving the configuration information for the SL MG transmitted from the first terminal.

13. The method of claim 12, wherein after receiving the configuration information for the SL MG transmitted from the first terminal, the method further comprises:
selecting resources outside a time range of the SL MG from a candidate resource set for transmitting data to the first terminal based on the configuration information for the SL MG.

14. A method for resource selection, performed by a first network device, comprising:
receiving a second message transmitted from a first terminal, wherein the second message is used to request configuration information for a sidelink measurement gap, SL MG, of the first terminal; and
transmitting a third message to the first terminal based on the second message, wherein the third message carries the configuration information for the SL MG.

15. A first terminal, comprising a memory, a transceiver and a processor,
wherein the memory is used for storing a computer program, the transceiver is used for receiving and transmitting data under control of the processor, and the processor is used for reading the computer program in the memory and perform the following operations:
determining configuration information for a sidelink measurement gap, SL MG, of the first terminal; and
selecting resources outside a time range of the SL MG from a candidate resource set for data transmission based on the configuration information for the SL MG.

16. The first terminal of claim 15, wherein determining configuration information for the SL MG of the first terminal comprises:
receiving a first message transmitted from a second terminal, wherein the first message carries resource information of a sidelink positioning reference signal, SL PRS, and/or the configuration information for the SL MG; and
determining the configuration information for the SL MG based on the first message.

17. The first terminal of claim 16, wherein in case that the first message carries the resource information of the SL PRS, determining the configuration information for the SL MG based on the first message comprises:
determining the configuration information for the SL MG based on the resource information of the SL PRS.

18. The first terminal of claim 17, wherein determining the configuration information for the SL MG based on the resource information of the SL PRS comprises:
transmitting a second message to a first network device based on the resource information of the SL PRS, wherein the second message is used to request the configuration information for the SL MG; and
receiving a third message transmitted from the first network device, wherein the third message carries the configuration information for the SL MG.

19. The first terminal of claim 18, wherein the second message carries one or more pieces of following information:
a universal set or subset of the resource information of the SL PRS;
a resource information identifier of the SL PRS;
a sidelink identifier of the first terminal and/or the second terminal; or
indication information for indicating to receive the SL PRS.

20. The first terminal of claim 15, wherein after determining the configuration information for the SL MG, the operation further comprises:
transmitting the configuration information for the SL MG to the second terminal.

21. The first terminal of any of claims 15 to 20, wherein the configuration information for the SL MG comprises one or more of the following:
a frequency point where a sidelink positioning reference signal, SL PRS, locates;
a measurement period and offset of a sidelink positioning reference signal, SL PRS;
a measurement duration of a sidelink positioning reference signal, SL PRS; or
a valid duration of the SL MG.

22. The first terminal of any of claims 16 to 19, wherein the resource information of the SL PRS comprises one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

23. The first terminal of claim 16, wherein the first message comprises any of the following:
a positioning protocol message for sidelink;
a signaling message for sidelink;
a radio resource control message for sidelink;
a media access control-control element, MAC CE, message for sidelink; or
physical layer scheduling control information for sidelink.

24. The first terminal of claim 18, wherein the second message or the third message comprises any of the following:
radio resource control message; or
media access control-control element, MAC CE, message.

25. A second terminal, comprising a memory, a transceiver and a processor,
wherein the memory is used for storing a computer program, the transceiver is used for receiving and transmitting data under control of the processor, and the processor is used for reading the computer program in the memory and perform the following operation:
transmitting a first message to a first terminal, wherein the first message carries resource information of a sidelink positioning reference signal, SL PRS, and/or configuration information for a sidelink measurement gap, SL MG, of the first terminal.

26. The second terminal of claim 25, wherein the operation further comprises:
receiving the configuration information for the SL MG transmitted from the first terminal.

27. The second terminal of claim 26, wherein after receiving the configuration information for the SL MG transmitted from the first terminal, the operation further comprises:
selecting resources outside a time range of the SL MG from a candidate resource set for transmitting data to the first terminal based on the configuration information for the SL MG.

28. A first network device, comprising a memory, a transceiver and a processor,
wherein the memory is used for storing a computer program, the transceiver is used for receiving and transmitting data under control of the processor, and the processor is used for reading the computer program in the memory and perform the following operations:
receiving a second message transmitted from a first terminal, wherein the second message is used to request configuration information for a sidelink measurement gap, SL MG, of the first terminal; and
transmitting a third message to the first terminal based on the second message, wherein the third message carries the configuration information for the SL MG.

29. An apparatus for resource selection, comprising:
a first determining unit, used for determining configuration information for a sidelink measurement gap, SL MG, of the first terminal; and
a first selecting unit, used for selecting resources outside a time range of the SL MG from a candidate resource set for data transmission based on the configuration information for the SL MG.

30. The apparatus of claim 29, wherein determining configuration information for the SL MG of the first terminal comprises:
receiving a first message transmitted from a second terminal, wherein the first message carries resource information of a sidelink positioning reference signal, SL PRS, and/or the configuration information for the SL MG; and
determining the configuration information for the SL MG based on the first message.

31. The apparatus of claim 30, wherein in case that the first message carries the resource information of the SL PRS, determining the configuration information for the SL MG based on the first message comprises:
determining the configuration information for the SL MG based on the resource information of the SL PRS.

32. The apparatus of claim 31, wherein determining the configuration information for the SL MG based on the resource information of the SL PRS comprises:
transmitting a second message to a first network device based on the resource information of the SL PRS, wherein the second message is used to request the configuration information for the SL MG; and
receiving a third message transmitted from the first network device, wherein the third message carries the configuration information for the SL MG.

33. The apparatus of claim 32, wherein the second message carries one or more pieces of following information:
a universal set or subset of the resource information of the SL PRS;
a resource information identifier of the SL PRS;
a sidelink identifier of the first terminal and/or the second terminal; or
indication information for indicating to receive the SL PRS.

34. The apparatus of claim 29, wherein after determining the configuration information for the SL MG, the apparatus further comprises:
transmitting the configuration information for the SL MG to the second terminal.

35. The apparatus of any of claims 29 to 34, wherein the configuration information for the SL MG comprises one or more of the following:
a frequency point where a sidelink positioning reference signal, SL PRS, locates;
a measurement period and offset of a sidelink positioning reference signal, SL PRS;
a measurement duration of a sidelink positioning reference signal, SL PRS; or
a valid duration of the SL MG.

36. The apparatus of any of claims 30 to 33, wherein the resource information of the SL PRS comprises one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

37. The apparatus of claim 30, wherein the first message comprises any of the following:
a positioning protocol message for sidelink;
a signaling message for sidelink;
a radio resource control message for sidelink;
a media access control-control element, MAC CE, message for sidelink; or
physical layer scheduling control information for sidelink.

38. The apparatus of claim 32, wherein the second message or the third message comprises any of the following:
radio resource control message; or
media access control-control element, MAC CE, message.

39. An apparatus for resource selection, comprising:
a second transmitting unit, used for transmitting a first message to a first terminal, wherein the first message carries resource information of a sidelink positioning reference signal, SL PRS, and/or configuration information for a sidelink measurement gap, SL MG, of the first terminal.

40. The apparatus of claim 39, further comprising:
a second receiving unit, used for receiving the configuration information for the SL MG transmitted from the first terminal.

41. The apparatus of claim 40, further comprising:
a second selecting unit, used for selecting resources outside a time range of the SL MG from a candidate resource set for transmitting data to the first terminal based on the configuration information for the SL MG.

42. An apparatus for resource selection, comprising:
a third receiving unit, used for receiving a second message transmitted from a first terminal, wherein the second message is used to request configuration information for a sidelink measurement gap, SL MG, of the first terminal; and
a third transmitting unit, used for transmitting a third message to the first terminal based on the second message, wherein the third message carries the configuration information for the SL MG.

43. A computer-readable storage medium storing a computer program, where the computer program is used for causing a computer to perform the method of any of claims 1 to 10, or the method of any of claims 11 to 13, or the method of claim 14.
